# EUROPEAN PATENT SPECIFICATION

(11) **EP 1 428 859 B1**
(45) Date of publication and mention of the grant of the patent: **22.08.2012**
(21) Application number: 03028229.7
(22) Date of filing: 09.12.2003
(51) Int. Cl.: C09B 47/067, C09B 47/06

(54) **Production process of metal phthalocyanine compound**
Herstellungsverfahren für Metallphthalocyaninverbindungen
Procédé de fabrication de phtalocyanine de métal

(30) Priority: 10.12.2002 JP 2002358306; 07.07.2003 JP 2003271387
(43) Date of publication of application: 16.06.2004
(73) Proprietor: FUJIFILM Corporation, Minato-ku Tokyo (JP)
(72) Inventor: Tanaka, Shigeaki, Minami-Ashigara-shi Kanagawa (JP); Tateishi, Keiichi, Minami-Ashigara-shi Kanagawa (JP); Chino, Tomohiro, Minami-Ashigara-shi Kanagawa (JP)
(74) Representative: Grünecker, Kinkeldey, Stockmair & Schwanhäusser

(56) References cited:
- EP-A- 0 266 219
- WO-A-03/062324
- DE-C- 658 781
- GB-A- 2 343 187
- US-A- 3 519 641
- US-A- 5 817 154
- US-A- 5 817 804
- KONDRATENKO N V ET AL: "Synthesis and characterization of polyfluoroalkoxysulfonyl phthalonitriles and corresponding zinc and cobalt phthalocyanines" DYES AND PIGMENTS, ELSEVIER APPLIED SCIENCE PUBLISHERS. BARKING, GB, vol. 41, no. 1-2, February 1999 (1999-02), pages 101-109, XP004157696 ISSN: 0143-7208
- XU H ET AL: "Synthesis of novel amphiphilic zinc phthalocyanines and fabrication of zinc phthalocyanine-titanium oxide multilayers" DYES AND PIGMENTS, ELSEVIER APPLIED SCIENCE PUBLISHERS. BARKING, GB, vol. 49, no. 1, April 2001 (2001-04), pages 9-14, XP004232681 ISSN: 0143-7208

## Description

The present invention relates to a novel process for producing a metal phthalocyanine, more specifically, the present invention relates to a process for stably producing a metal phthalocyanine compound in a high yield under mild conditions.

### BACKGROUND OF THE INVENTION

Metal phthalocyanine compounds are useful as a material for paint, printing ink, coloring agent, electrophotographic photoreceptor and optical disk and a very large number of compounds have been heretofore synthesized and produced. The industrial production of metal phthalocyanine compounds is described in detail in Oho Shirai and Nagao Kobayashi, Phthalocyanine -Kagaku to Kino-(Phthalocyanine -Chemistry and Function-), IPC (1997). These production methods are roughly classified into the following two types. 1) Wyler method: a production method where phthalic anhydride or phthalic anhydride imide is used as a raw material and reacted with urea and a metal salt in the presence of a condensing agent at 160 to 180°C. As the condensing agent, an arsenic-type inorganic salt has been long used, however, in recent years, a molybdate is generally used. In this type of method, a solid phase method of using a urea melt in place of a solvent is known but this is not preferred as a method for mass production because of probability of bubbling, defects due to solidification at the dropping of temperature, low yield and high impurity percentage in the product. On the other hand, a liquid phase method using an inactive organic solvent such as nitrobenzene and polyhalogenated benzene gives a high yield and a stable quality as compared with the solid phase method and this method is predominating at present as an industrial production method of phthalocyanine. However, this liquid phase method requires cumbersome unit operations such as separation and recovery of the reaction solvent and has a problem in view of the safety, for example, nitrobenzene has toxicity and polyhalogenated benzene generates a slight amount of harmful substances such as halogenated biphenyl as byproducts. The selection of an appropriate high boiling point solvent is one of problems to be solved in the industrial production of phthalocyanine. 2) Phthalonitrile method: a method using a highly reactive phthalonitrile as a starting material. This type of method includes a method called solid phase method or baking method, where a mixture of phthalonitrile and a metal salt is heated or a melted urea is used as the solvent, and a liquid phase method of performing condensation under heating in an appropriate high boiling point solvent. In the latter method, quinoline or the like is sometimes preferably used because of its activity of accelerating the condensation of a basic solvent, however, industrial use of quinoline or the like must be avoided at present in view of safety and the selection of solvent in this method is one of problems to be solved similarly to the liquid phase method in the Wyler method. Furthermore, the phthalonitrile is expensive as high as about 10 times the phthalic anhydride and therefore, this method is disadvantageous in that the raw material cost is fairly higher than that of the Wyler method. Nevertheless, when various merits in the production are valued, this method is optimal for the production of recent functional phthalocyanines having a high added value even if the market price is taken into consideration. JP-A-52-14 1839 (the term "JP-A" as used herein means an "unexamined published Japanese patent application") discloses a method for relieving reaction conditions by using a base in this phthalonitrile method. For example, it is revealed that when phthalonitrile and cuprous chloride are reacted at a temperature of about 100°C in ethylene glycol under bubbling of ammonia, copper phthalocyanine can be obtained in a high yield. Furthermore, various phthalocyanines are being produced in industry by using a high boiling point amine such as secondary or tertiary amine as the condensing agent in place of ammonia as the base. Japanese Patent 2,520,476 (Application No. : JP-A-3-021669) discloses a general industrial method for producing a non-metal phthalocyanine, where amines are used as the condensing agent in addition to alcoholates and the amines are high boiling point amines such as tributylamine, diazabicycloundecene and diazobicyclononene. However, if such a relatively strong base is used, decomposition occurs depending on phthalonitrile and the yield of objective phthalocyanine compound disadvantageously decreases. For example, when a phthalonitrile substituted by an electron withdrawing group is used, the objective condensation reaction and the decomposition due to attack of a nucleophilic agent such as hydroxide ion on the phthalonitrile concertedly take place and therefore, the condensation ratio of metal phthalocyanine compound does not increase. Also, in the production of a metal phthalocyanine compound by using a metal chloride, hydrochloric acid is generated with the progress of condensation and this acid inhibits the attack of a nucleophilic seed acting as a catalyst for condensation, as a result, the condensation reaction is gradually retarded and at last stopped even if raw materials remain. In this state, the objective material can be hardly isolated from the reaction mixture by recrystallization or reprecipitation having production adaptability but a purification method low in the productivity, such as column chromatography, is necessary. Therefore, this method is disadvantageous in that the production step is prolonged and from the industrial viewpoint, the cost increases. JP-A-2000-169743 discloses a method of producing a phthalocyanine compound in the presence of an alkaline earth metal compound. However, this method has a problem in view of yield and purity. A tetramerization process as a useful route to obtain unsymmetrically substituted phthalocyanines in high purity is disclosed in GB,A,2 343 187; the process is carried out in the presence of zinc acetat and boric acid); the compulsory presence of a buffer system is not explicitly mentioned.

### SUMMARY OF THE INVENTION

The present invention has been made to solve the problems in conventional production methods of metal phthalocyanine compound and thereby achieve the following objects. That is, an object of the present invention is to provide a process for producing a phthalocyanine compound by reacting under heating at least one of Compounds A to F represented below and a metal compound, where a high-purity metal phthalocyanine compound can be industrially stably produced in a high yield.

As a result of extensive investigations on the production process of performing the reaction under mild conditions and giving a high reaction yield, the present inventors have found that when the reaction is performed in a buffer solution, those problems can be solved. The present invention has been accomplished based on this finding. More specifically, according to the present invention, a production process having the following constitutions is provided and the above-described object can be attained.
1. A process for producing a metal phthalocyanine compound, which comprises reacting at least one of the Compounds A to F represented below and a metal compound,
   wherein said reaction is performed in a buffer solution comprising an acid and at least one of an organic base and an alkali metal-containing inorganic base: 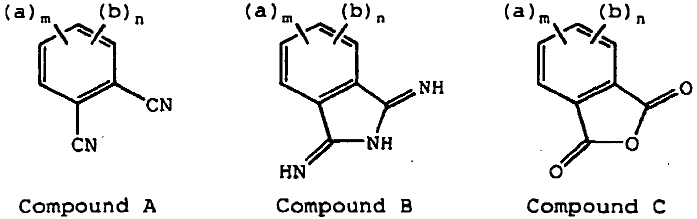 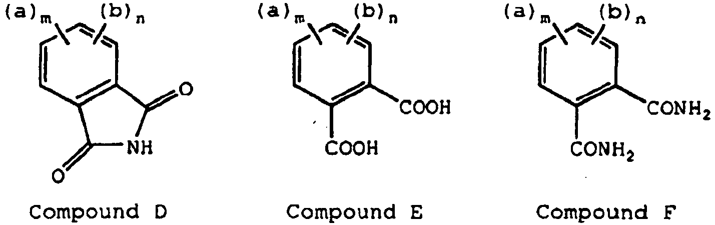 wherein a and b each independently represents a substituent, and the sum total of Hammett's substituent constant σp values thereof is 0.20 or more; m and n each represents an integer satisfying 1≤m≤4, 0≤n≤3 and 1≤m+n≤4.
2. The process as described in claim 1, wherein the Compounds A to F are Compounds G to L represented below : 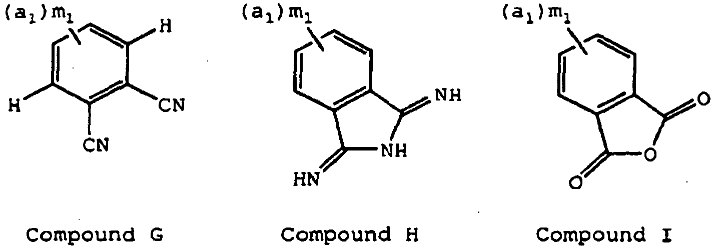 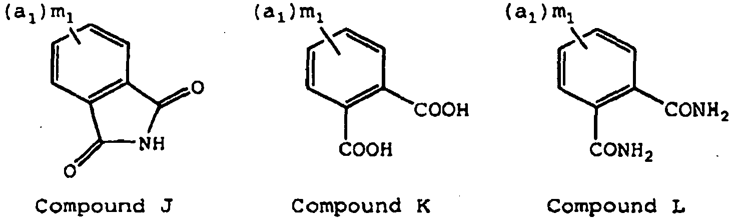 wherein a₁ represents a sulfinyl group, a sulfonyl group, a sulfamoyl group, an acyl group or a carbamoyl group; m₁ represents 1 or 2.
3. The process as described in the item 1 or 2, wherein at least one of compounds selected from glycerin and the compounds represented by the following formula (III) is used as the reaction solvent: 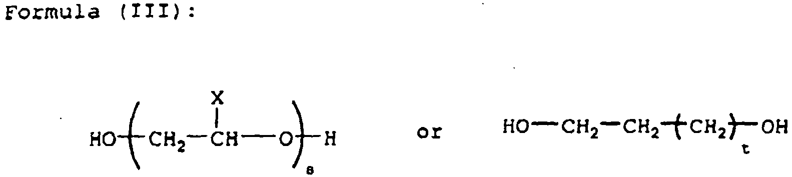 wherein s and t each independently represents a positive integer and X represents a hydrogen atom or a methyl group.
4. The process as described in any one of the item 1 to 3, wherein the organic base includes at least one selected from the compounds represented by the following formula (IV): 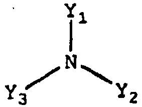 wherein Y₁, Y₂ and Y₃ each independently represents a hydrogen atom, an alkyl group, an alkenyl group, an alkynyl group, a cycloalkyl group, a cycloalkenyl group, an aryl group or a heterocyclic group, Y₁, Y₂ and Y₃ may combine to form a condensed organic base, and each group may further have a substituent.
5. The process of any one of the item 1 to 4, wherein the acid has pKa of 0.0 to 7.0 at 25°C and ionic strength of 0.1.
6. The process of any one of the item 1 to 5, wherein the acid is an organic acid.
7. The process of any one of the item 1 to 6, wherein the reaction temperature is from 30 to 220°C.
8. The process of any one of the item 1 to 7, wherein the metal compound includes at least one of VO, TiO, Mn, Fe, Co, Ni, Cu, Zn, Pd, Cd and Mg.
9. The process of any one of the item 1 to 8, wherein the amount of the acid is from 0.05 to 20 equivalent based on the total amount of Compound A to F.
10. The process of any one of the item 1 to 9, wherein the amount of the base is from 0.05 to 30 equivalent based on the total amount of Compound A to F.

According to the present invention, a process for industrially stably producing a high-purity metal phthalocyanine compound in a high yield can be obtained.

### DETAILED DESCRIPTION OF THE INVENTION

As described above, in the process of producing a metal phthalocyanine compound from at least one of Compounds A to F and a metal compound, when a base is used as a catalyst for the condensation of phthalocyanine, the reaction is believed to proceed with good efficiency. Nevertheless, when a compound having an electron-withdrawing group among Compounds A to F is used, the decomposition of phthalonitrile is accelerated by a base. Particularly, in the case of a metal phthalocyanine compound substituted by an electron-withdrawing group having a high σp value, the decomposition outstandingly proceeds. It has been found that this decomposition can be suppressed when an acid is present together in the reaction system. More specifically, the reaction system becomes a buffer solution comprising an acid and a base and in this solution, the reaction efficiently proceeds without causing decomposition of Compounds A to F. Furthermore, even if an acid is generated as a by-product of the reaction, since the reaction is performed in a buffer solution, the pH can be maintained and the reaction can stably proceed.

Here, the Hammett's substituent constant op value used in the present invention is described. The Hammett's rule is a rule of thumb advocated by L.P. Hammett in 1935 so as to quantitatively discuss the effect of substituent on the reaction or equilibrium of benzene derivatives and its propriety is widely admitted at present. The substituent constant determined by the Hammett's rule includes a σp value and a σm value and these values can be found in a large number of general publications but these are described in detail, for example, in J.A. Dean (compiler), Lange's Handbook of Chemistry, 12th ed., McGraw-Hill (1979), and Kagaku no Ryoiki (Chemistry Region), extra number, No. 122, pp. 96-103, Nankodo (1979). In the present invention, each substituent is limited or described using the Hammett's substituent constant σp value but this does not mean that the substituent is limited only to those having a known value which can be found in the publications. Needless to say, the substituent includes substituents of which σp value is not known in publications but when measured based on the Hammett's rule, falls within the range specified. The σp value is used as a measure for showing the electron effect of substituent irrespective of the substitution site. In the present invention, the σp value is used in this meaning.

The buffer solution is a solution having a large buffering activity on the change in the concentration of a certain component in the solution. For example, in a mixed solution of a weak acid (AH) such as acetic acid and a conjugate base (A⁻) thereof, even when a slight amount of H⁺ or OH⁻ is added, the change of pH can be suppressed as little as possible. The same activity is expressed also in a system containing a weak base (B) and a conjugate acid (BH⁺). Practical pH buffer solutions can be found in many general publications but are described in detail, for example, in Saburo Nagakura (compiler), Rikagaku Jiten (Dictionary of Physical Sciences), 5th ed., Iwanami Shoten (1999).

The acid for use in the present invention is not particularly limited and as long as the dissociation index pKa in an aqueous solution at 25°C is 7.0 or less, either an organic compound or an inorganic compound can be preferably used. The pKa represents a logarithmic value of reciprocal of the acid dissociation constant and this value is determined at an ion intensity of 0.1 and 25°C. The acid having pKa of 0.0 to 7.0 may be either an inorganic acid such as phosphoric acid or an organic acid such as acetic acid, malonic acid and citric acid, however, the acid having pKa of 0.0 to 7.0 and exhibiting a greater effect in the above-described improvement is an organic acid. Among the organic acids, organic acids having a carboxyl group are most preferred. The organic acid having pKa of 0.0 to 7.0 may be either a monobasic organic acid or a polybasic organic acid. In the case of a polybasic organic acid, this can also be used in the form of a metal salt (for example, sodium salt or potassium salt) or an ammonium salt as long as the pKa thereof is from 0.0 to 7.0. Furthermore, organic acids having pKa of 0.0 to 7.0 may be used as a mixture of two or more thereof. Specific preferred examples of the organic acid having pKa of 0.0 to 7.0 for use in the present invention include aliphatic monobasic organic acids such as formic acid, acetic acid, monochloroacetic acid, monobromoacetic acid, glycolic acid, propionic acid, monochloropropionic acid, lactic acid, pyruvic acid, acrylic acid, butyric acid, isobutyric acid, pivalic acid, aminobutyric acid, valeric acid and isovaleric acid; amino acid-type compounds such as asparagine, alanine, arginine, ethionine, glycine, glutamine, cysteine, serine, methionine and leucine; aromatic monobasic organic acids such as benzoic acid, mono-substituted (e.g., chloro-, hydroxy-)benzoic acid and nicotinic acid; aliphatic dibasic organic acids such as oxalic acid, malonic acid, succinic acid, tartaric acid, malic acid, maleic acid, fumaric acid, oxalacetic acid, glutaric acid and adipic acid; amino acid-type dibasic organic acids such as aspartic acid, glutamic acid, glutaric acid, cystine and ascorbic acid; aromatic dibasic organic acids such as phthalic acid and terephthalic acid; and tribasic organic acids such as citric acid. In the present invention, among these organic acids, aliphatic monobasic organic acids are more preferred and formic acid, acetic acid and propionic acid are most preferred.

The amount used of the compound (acid) having pKa of 7.0 or less is from 0.05 to 20 equivalent, preferably from 0.1 to 10 times, based on the total amount used of Compounds A to F. With the content in this range, the activity of preventing the decomposition of compounds A to F can be obtained. If the amount used of the acid having pKa of 7.0 or less is less than 0.05 times the total amount used of Compounds A to F, the decomposition of compounds A to F cannot be satisfactorily suppressed, whereas if the amount used of the acid having pKa of 7.0 or less exceeds 20 times the total amount used of compounds A to F, the reaction system deviates to the acidic side to hinder the progress of reaction or since an excess base is used until a buffer solution is obtained, a salt of acid and base may be disadvantageously produced as a crystal.

The base which can be used in the reaction is an alkali metal-containing inorganic base or an organic base. Preferred examples of the inorganic base include lithium carbonate, sodium carbonate, potassium carbonate, sodium hydrogencarbonate, lithium hydroxide, sodium hydroxide and potassium hydroxide. The organic base is preferably an amine (e.g., triethylamine, tributylamine, diisopropylethylamine, pyridine, dimethylaminopyridine), more preferably at least one compound selected from the compounds represented by the following formula (IV):

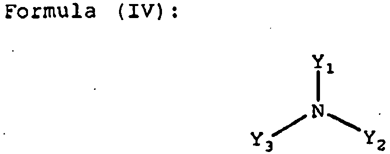

In formula (IV), Y₁, Y₂ and Y₃ each independently represents a hydrogen atom, an alkyl group, an alkenyl group, an alkynyl group, a cycloalkyl group, a cycloalkenyl group, an aryl group or a heterocyclic group. Examples of these substituents include a linear or branched alkyl group preferably having from 1 to 30 (more preferably from 1 to 12) carbon atoms, an aralkyl group preferably having from 7 to 30 (more preferably from 7 to 18) carbon atoms, an alkenyl group preferably having from 2 to 30 (more preferably from 2 to 12) carbon atoms, a linear or branched alkynyl group preferably having from 2 to 30 (more preferably from 2 to 12) carbon atoms, a cycloalkyl group preferably having from 3 to 30 (more preferably from 3 to 12) carbon atoms, which may have a side chain, a cycloalkenyl group preferably having from 3 to 30 (more preferably from 3 to 12) carbon atoms, which may have a side chain (specific examples of these groups include methyl, ethyl, propyl, isopropyl, tert-butyl, 2-methanesulfonylethyl, 3-phenoxypropyl, trifluoromethyl, cyclopentyl), an aryl group (a substituted or unsubstituted aryl group preferably having from 6 to 30 (more preferably from 6 to 18) carbon atoms, e.g., phenyl, 4-tert-butylphenyl, 2,4-di-tert-amylphenyl) and a heterocyclic group (preferably a 5- or 6-membered substituted or unsubstituted monovalent group resulting from removing one hydrogen atom of an aromatic or non-aromatic heterocyclic compound, more preferably a 5- or 6-membered aromatic heterocyclic group having from 3 to 30 carbon atoms, e.g., imidazolyl, pyrazolyl, triazolyl, 2-furyl, 2-thienyl, 2-pyrimidinyl, 2-benzothiazolyl). Two or more of Y₁, Y₂ and Y₃ may form a ring. Preferred examples of the ring include pyridine, imidazole, diazabicycloundecene, piperidine, morpholine, azacrown. Among these, more preferred are pyridine, imidazole, piperidine and morpholine, and still more preferred are pyridine, piperidine and morpholine.

Y₁, Y₂ and Y₃ each is preferably an alkyl group, a cycloalkyl group, an aryl group or a heterocyclic group, more preferably an alkyl group, an aryl group or a heterocyclic group, and most preferably an alkyl group. These groups each may further have a substituent. Examples of this substituent include a linear or branched alkyl group preferably having from 1 to 30 (more preferably from 1 to 12) carbon atoms, an aralkyl group preferably having from 7 to 30 (more preferably from 7 to 18) carbon atoms, an alkenyl group preferably having from 2 to 30 (more preferably from 2 to 12) carbon atoms, a linear or branched alkynyl group preferably having from 2 to 30 (more preferably from 2 to 12) carbon atoms, a cycloalkyl group preferably having from 3 to 30 (more preferably from 3 to 12) carbon atoms, which may have a side chain, a cycloalkenyl group preferably having from 3 to 30 (more preferably from 3 to 12) carbon atoms, which may have a side chain (specific examples of these groups include methyl, ethyl, propyl, isopropyl, tert-butyl, 2-methanesulfonylethyl, 3-phenoxypropyl, trifluoromethyl, cyclopentyl), an aryl group (a substituted or unsubstituted aryl group preferably having from 6 to 30 (more preferably from 6 to 18) carbon atoms, e.g., phenyl, 4-tert-butylphenyl, 2,4-di-tert-amylphenyl), a heterocyclic group (preferably a 5- or 6-membered substituted or unsubstituted monovalent group resulting from removing one hydrogen atom of an aromatic or non-aromatic heterocyclic compound, more preferably a 5- or 6-membered aromatic heterocyclic group having from 3 to 30 carbon atoms, e.g., imidazolyl, pyrazolyl, triazolyl, 2-furyl, 2-thienyl, 2-pyrimidinyl, 2-benzothiazolyl), a halogeno group (e.g., fluorine atom, chlorine atom, bromine atom), an alkyloxy group (a substituted or unsubstituted alkyloxy group preferably having from 1 to 30, more preferably from 1 to 12, carbon atoms, e.g., methoxy, ethoxy, 2-methoxyethoxy, 2-methanesulfonylethoxy), an aryloxy group (a substituted or unsubstituted aryloxy group preferably having from 6 to 30, more preferably from 6 to 18, carbon atoms, e.g., phenoxy, 2-methylphenoxy, 4-tert-butylphenoxy, 3-nitrophenoxy, 3-tert-butyloxycarbamoylphenoxy, 3-methoxycarbamoyl), an acylamino group (preferably a formylamino group, a substituted or unsubstituted alkylcarbonylamino group having from 1 to 30 (more preferably from 1 to 12) carbon atoms and a substituted or unsubstituted arylcarbonylamino group having from 6 to 30 (more preferably from 6 to 18) carbon atoms, e.g., formamide, acetamide, benzamide, 4-(3-tert-butyl-4-hydroxyphenoxy)butanamide), an alkylamino group (a substituted or unsubstituted alkylamino group having from 1 to 30 (preferably from 1 to 12) carbon atoms, e.g., methylamino, butylamino, diethylamino, methylbutylamino), an arylamino group (a substituted or unsubstituted arylamino group preferably having from 6 to 30 (more preferably from 6 to 18) carbon atoms, e.g., phenylamino, 2-chloroanilino), a ureido group (a substituted or unsubstituted ureido group preferably having from 1 to 30 (more preferably from 1 to 12) carbon atoms, e.g., phenylureido, methylureido, N,N-dibutylureido), a sulfamoylamino group (a substituted or unsubstituted sulfamoylamino group preferably having from 0 to 30 (more preferably from 0 to 18) carbon atoms, e.g., N,N-dibutylsulfamoylamino), an alkylthio group (a substituted or unsubstituted alkylthio group preferably having from 1 to 30 (more preferably from 1 to 12) carbon atoms, e.g., methylthio, octylthio, 2-phenoxyethylthio), an arylthio group (a substituted or unsubstituted arylthio group preferably having from 6 to 30 (more preferably from 6 to 18) carbon atoms, e.g., phenylthio, 2-butoxy-5-tert-octylphenylthio, 2-carboxyphenylthio), an alkyloxycarbonylamino group (a substituted or unsubstituted alkyloxycarbonylamino group preferably having from 2 to 30 (more preferably from 2 to 12) carbon atoms, e.g., methoxycarbonylamino), a sulfonamido group (preferably a substituted or unsubstituted alkylsulfonylamino group having from 1 to 30 (more preferably from 1 to 12) carbon atoms and a substituted or unsubstituted arylsulfonylamino group having from 6 to 30 (more preferably from 6 to 18) carbon atoms, e.g., methanesulfonamido, benzenesulfonamido, p-toluenesulfonamido, octadecanesulfonamido), a carbamoyl group (a substituted or unsubstituted carbamoyl group preferably having from 1 to 30 (more preferably from 1 to 12) carbon atoms, e.g., N-ethylcarbamoyl, N,N-dibutylcarbamoyl), a sulfamoyl group (a substituted or unsubstituted sulfamoyl group preferably having from 0 to 30 carbon atoms, e.g., N-ethylsulfamoyl, N,N-dipropylsulfamoyl, N,N-diethylsulfamoyl), a sulfonyl group (preferably a substituted or unsubstituted alkylsulfonyl group having from 1 to 30 (more preferably from 1 to 12) carbon atoms and a substituted or unsubstituted arylsulfonyl group having from 6 to 30 (more preferably from 6 to 18) carbon atoms, e.g., methanesulfonyl, octanesulfonyl, benzenesulfonyl, toluenesulfonyl), an alkyloxycarbonyl group (a substituted or unsubstituted alkyloxycarbonyl group preferably having from 2 to 30 (more preferably from 2 to 12) carbon atoms, e.g., methoxycarbonyl, butyloxycarbonyl), a heterocyclic oxy group (a substituted or unsubstituted heterocyclic oxy group preferably having from 2 to 30 (more preferably from 2 to 12) carbon atoms, e.g., 1-phenyltetrazol-5-oxy, 2-tetrahydropyranyloxy), an azo group (preferably a substituted or unsubstituted arylazo group having from 6 to 30 (more preferably from 6 to 18) carbon atoms and a substituted or unsubstituted heterocyclic azo group having from 3 to 30 carbon atoms, e.g., phenylazo, 4-methoxyphenylazo, 4-pivaloylaminophenylazo, 2-hydroxy-4-propanoylphenylazo), an acyloxy group (preferably a formyloxy group, a substituted or unsubstituted alkylcarbonyloxy group having from 2 to 30 (more preferably from 2 to 12) carbon atoms and a substituted or unsubstituted arylcarbonyloxy group having from 7 to 30 (more preferably from 7 to 18) carbon atoms, e.g., acetoxy), a carbamoyloxy group (a substituted or unsubstituted carbamoyloxy group preferably having from 1 to 30 (more preferably from 1 to 12) carbon atoms, e.g., N-methylcarbamoyloxy, N-phenylcarbamoyloxy), a silyloxy group (a silyloxy group preferably having from 3 to 20 (more preferably from 3 to 12) carbon atoms, e.g., trimethylsilyloxy, dibutylmethylsilyloxy), an aryloxycarbonylamino group (a substituted or unsubstituted aryloxycarbonylamino group preferably having from 7 to 30 (more preferably from 7 to 18) carbon atoms, e.g., phenoxycarbonylamino), an imido group (e.g., N-succinimido, N-phthalimido), a heterocyclic thio group (a substituted or unsubstituted heterocyclic thio group preferably having from 2 to 30 (more preferably from 2 to 12) carbon atoms, e.g., 2-benzothiazolylthio, 2,4-diphenoxy-1,3,5-triazole-6-thio, 2-pyridylthio), a sulfinyl group (preferably a substituted or unsubstituted alkylsulfinyl group having from 1 to 30 (more preferably from 1 to 12) carbon atoms and a substituted or unsubstituted arylsulfinyl group having from 6 to 30 (more preferably from 6 to 18) carbon atoms, e.g., 3-phenoxypropylsulfinyl), a phosphonyl group (e.g., phenoxyphosphonyl, octyloxyphosphonyl, phenylphosphonyl), an aryloxycarbonyl group (a substituted or unsubstituted aryloxycarbonyl group preferably having from 7 to 30 (more preferably from 7 to 18) carbon atoms, e.g., phenoxycarbonyl), an acyl group (preferably a formyl group, a substituted or unsubstituted alkylcarbonyl group having from 2 to 30 (more preferably from 2 to 12) carbon atoms, a substituted or unsubstituted arylcarbonyl group having from 7 to 30 (more preferably from 7 to 18) carbon atoms and a substituted or unsubstituted heterocyclic carbonyl group having from 4 to 30 (more preferably from 4 to 12) carbon atoms, which is bonded to the carbonyl group through a carbon atom, e.g., acetyl, 3-phenylpropanoyl, benzoyl), an ionic hydrophilic group (e.g., carboxyl group, phosphono group, sulfo group, quaternary ammonium group), a cyano group, a hydroxyl group, a nitro group and an amino group. Among these substituents, preferred are a heterocyclic group, an alkyloxy group, an aryloxy group, an alkylamino group, an arylamino group, an alkylthio group, an arylthio group, an acyl group, an alkylcarbonyl group, an arylcarbonyl group, a heterocyclic carbonyl group, an ionic hydrophilic group, a hydroxyl group and an amino group, more preferred are a heterocyclic group, an alkyloxy group, an aryloxy group, an alkylamino group, an arylamino group, an acyl group, an alkylcarbonyl group, an arylcarbonyl group, a heterocyclic carbonyl group, an ionic hydrophilic group, a hydroxyl group and an amino group, still more preferred are an alkylcarbonyl group, an arylcarbonyl group, a heterocyclic carbonyl group, an ionic hydrophilic group, a hydroxyl group, and an amino group.

In particular, Y₁, Y₂ and Y₃ each is preferably an alkyl, cycloalkyl, aryl or heterocyclic group having a preferred substituent, more preferably an alkyl, aryl or heterocyclic group having a preferred substituent, still more preferably an alkyl group having a preferred substituent. In addition, an amine having a chelating ability for metal is preferred.

Preferred examples of the organic base include triethylamine, tributylamine, diisopropylethylamine, pyridine, dimethylaminopyridine, ethanolamine, diethanolamine, triethanolamine, oxine, ethylenediamine, triethylenetriamine, glycine, iminoacetic acid and ethylenediaminetetraacetic acid. Among these, more preferred are triethylamine, pyridine, ethanolamine, diethanolamine, triethanolamine, oxine, ethylenediamine, triethylenetriamine, glycine, iminoacetic acid and ethylenediaminetetraacetic acid, and most preferred are ethanolamine, diethanolamine, triethanolamine, ethylenediamine, triethylenetriamine and ethylenediaminetetraacetic acid.

Other examples include lithium acetate, potassium acetate, sodium oxalate and disodium ethylenediaminetetraacetate. In the present invention, the alkali metal salt of these organic acids is also defined as the inorganic base. In the present invention, an organic base and an inorganic base described above are preferably used in combination. However, when such a base is dissolved in a reaction solvent, the resulting solution acts as a buffer solution, therefore, a base having high solubility is preferred, an organic base is more preferred, and an organic acid salt with the cation being an alkali metal ion is still more preferred. The alkali metal ion is preferably lithium ion, sodium ion or potassium ion, and an organic acid salt with lithium ion or sodium ion is most preferred. The amount of the base used is from 0.05 to 30.0 equivalent, preferably from 0.5 to 15.0 equivalent, based on the amount used of compounds A to F.

In the production process of a metal phthalocyanine compound of the present invention, at least one of Compounds A to F and a metal compound are preferably reacted in the presence of the above-described base and acid having pKa of 7.0 or less. As for the reaction conditions, the reaction temperature is from 30 to 220°C, preferably from 40 to 200°C, more preferably from 50 to 180°C. If the reaction temperature is less than 30°C, the reaction rate seriously decreases and this is unprofitable because the synthesis takes an extremely long time, whereas if the synthesis is performed at a high temperature exceeding 220°C, the amount of byproducts produced disadvantageously increases.

Among Compounds A to F, preferred are Compounds A and B and more preferred is Compound A. Compounds A to F may be used individually or in combination of two or more thereof.

In Compounds A to F, the substituent a is preferably an alkyl group, an aralkyl group, an alkenyl group, an alkynyl group, a cycloalkyl group, a cycloalkenyl group, an aryl group, a heterocyclic group, an alkyloxy group, an aryloxy group, an acylamino group, an alkylamino group, an anilino group, a ureido group, a sulfamoylamino group, an alkylthio group, an arylthio group, a sulfonamido group, a carbamoyl group, a sulfamoyl group, a sulfonyl group, an alkyloxycarbonyl group, a heterocyclic oxy group, an azo group, an acyloxy group, a carbamoyloxy group, a silyloxy group, an aryloxycarbonylamino group, an imido group, a heterocyclic thio group, a sulfinyl group, a phosphonyl group, an aryloxycarbonyl group, an acyl group, an amino group or an ionic hydrophilic group.

The substituent a is more preferably an aryl group, a heterocyclic group, a ureido group, a sulfonyl group, a sulfinyl group, a sulfonamido group, an acyl group, a carbamoyl group, a sulfamoyl group, an alkoxycarbonyl group or an ionic hydrophilic group.

The substituent a is still more preferably a heterocyclic group, a sulfinyl group, a sulfonyl group, a sulfamoyl group, an acyl group, a carbamoyl group or an alkoxycarbonyl group, and particularly preferably a sulfonyl group.

These groups each may further have a substituent such as ionic hydrophilic group, and/or an alkyl or aryl group substituted by an ionic hydrophilic group.

In particular, a sulfonyl group (preferably an alkylsulfonyl group) substituted by an ionic hydrophilic group (preferably a sulfo group) is preferred.

Examples of the ionic hydrophilic group as the substituent include a sulfo group, a carboxyl group, a phosphono group and a quaternary ammonium group. Among these ionic hydrophilic groups, a carboxyl group and a sulfo group are preferred, and a sulfo group is more preferred.

The carboxyl group, phosphono group and sulfo group each may be in a salt state and examples of the counter ion for forming the salt include alkali metal ion (e.g., lithium ion, sodium ion, potassium ion) and organic cation (e.g., tetramethylguanidium ion).

In Compounds A to F, the substituent b is preferably a halogeno group, a cyano group, a hydroxyl group, a nitro group or an ionic hydrophilic group, more preferably a halogeno group, a cyano group, a nitro group or an ionic hydrophilic group, and most preferably a halogeno group, a cyano group or an ionic hydrophilic group.

Examples of this substituent include a linear or branched alkyl group preferably having from 1 to 30 (more preferably from 1 to 12) carbon atoms, an aralkyl group preferably having from 7 to 30 (more preferably from 7 to 18) carbon atoms, an alkenyl group preferably having from 2 to 30 (more preferably from 2 to 12) carbon atoms, a linear or branched alkynyl group preferably having from 2 to 30 (more preferably from 2 to 12) carbon atoms, a cycloalkyl group preferably having from 3 to 30 (more preferably from 3 to 12) carbon atoms, which may have a side chain, a cycloalkenyl group preferably having from 3 to 30 (more preferably from 3 to 12) carbon atoms, which may have a side chain (specific examples of these groups include methyl, ethyl, propyl, isopropyl, tert-butyl, 2-methanesulfonylethyl, 3-phenoxypropyl, trifluoromethyl, cyclopentyl), an aryl group (a substituted or unsubstituted aryl group preferably having from 6 to 30 (more preferably from 6 to 18) carbon atoms, e.g., phenyl, 4-tert-butylphenyl, 2,4-di-tert-amylphenyl), a heterocyclic group (preferably a 5- or 6-membered substituted or unsubstituted monovalent group resulting from removing one hydrogen atom of an aromatic or non-aromatic heterocyclic compound, more preferably a 5- or 6-membered aromatic heterocyclic group having from 3 to 30 carbon atoms, e.g., imidazolyl, pyrazolyl, triazolyl, 2-furyl, 2-thienyl, 2-pyrimidinyl, 2-benzothiazolyl), a halogeno group (e.g., fluorine atom, chlorine atom, bromine atom), an alkyloxy group (a substituted or unsubstituted alkyloxy group preferably having from 1 to 30, more preferably from 1 to 12, carbon atoms, e.g., methoxy, ethoxy, 2-methoxyethoxy, 2-methanesulfonylethoxy), an aryloxy group (a substituted or unsubstituted aryloxy group preferably having from 6 to 30, more preferably from 6 to 18, carbon atoms, e.g., phenoxy, 2-methylphenoxy, 4-tert-butylphenoxy, 3-nitrophenoxy, 3-tert-butyloxycarbamoylphenoxy, 3-methoxycarbamoyl), an acylamino group (preferably a formylamino group, a substituted or unsubstituted alkylcarbonylamino group having from 1 to 30 (more preferably from 1 to 12) carbon atoms and a substituted or unsubstituted arylcarbonylamino group having from 6 to 30 (more preferably from 6 to 18) carbon atoms, e.g., formamide, acetamide, benzamide, 4-(3-tert-butyl-4-hydroxyphenoxy)butanamide), an alkylamino group (a substituted or unsubstituted alkylamino group having from 1 to 30 (preferably from 1 to 12) carbon atoms, e.g., methylamino, butylamino, diethylamino, methylbutylamino), an arylamino group (a substituted or unsubstituted arylamino group preferably having from 6 to 30 (more preferably from 6 to 18) carbon atoms, e.g., phenylamino, 2-chloroanilino), a ureido group (a substituted or unsubstituted ureido group preferably having from 1 to 30 (more preferably from 1 to 12) carbon atoms, e.g., phenylureido, methylureido, N,N-dibutylureido), a sulfamoylamino group (a substituted or unsubstituted sulfamoylamino group preferably having from 0 to 30 (more preferably from 0 to 18) carbon atoms, e.g., N,N-dibutylsulfamoylamino), an alkylthio group (a substituted or unsubstituted alkylthio group preferably having from 1 to 30 (more preferably from 1 to 12) carbon atoms, e.g., methylthio, octylthio, 2-phenoxyethylthio), an arylthio group (a substituted or unsubstituted arylthio group preferably having from 6 to 30 (more preferably from 6 to 18) carbon atoms, e.g., phenylthio, 2-butoxy-5-tert-octylphenylthio, 2-carboxyphenylthio), an alkyloxycarbonylamino group (a substituted or unsubstituted alkyloxycarbonylamino group preferably having from 2 to 30 (more preferably from 2 to 12) carbon atoms, e.g., methoxycarbonylamino), a sulfonamido group (preferably a substituted or unsubstituted alkylsulfonylamino group having from 1 to 30 (more preferably from 1 to 12) carbon atoms and a substituted or unsubstituted arylsulfonylamino group having from 6 to 30 (more preferably from 6 to 18) carbon atoms, e.g., methanesulfonamido, benzenesulfonamido, p-toluenesulfonamido, octadecanesulfonamido), a carbamoyl group (a substituted or unsubstituted carbamoyl group preferably having from 1 to 30 (more preferably from 1 to 12) carbon atoms, e.g., N-ethylcarbamoyl, N,N-dibutylcarbamoyl), a sulfamoyl group (a substituted or unsubstituted sulfamoyl group preferably having from 0 to 30 carbon atoms, e.g., N-ethylsulfamoyl, N,N-dipropylsulfamoyl, N,N-diethylsulfamoyl), a sulfonyl group (preferably a substituted or unsubstituted alkylsulfonyl group having from 1 to 30 (more preferably from 1 to 12) carbon atoms and a substituted or unsubstituted arylsulfonyl group having from 6 to 30 (more preferably from 6 to 18) carbon atoms, e.g., methanesulfonyl, octanesulfonyl, benzenesulfonyl, toluenesulfonyl), an alkyloxycarbonyl group (a substituted or unsubstituted alkyloxycarbonyl group preferably having from 2 to 30 (more preferably from 2 to 12) carbon atoms, e.g., methoxycarbonyl, butyloxycarbonyl), a heterocyclic oxy group (a substituted or unsubstituted heterocyclic oxy group preferably having from 2 to 30 (more preferably from 2 to 12) carbon atoms, e.g., 1-phenyltetrazol-5-oxy, 2-tetrahydropyranyloxy), an azo group (preferably a substituted or unsubstituted arylazo group having from 6 to 30 (more preferably from 6 to 18) carbon atoms and a substituted or unsubstituted heterocyclic azo group having from 3 to 30 carbon atoms, e.g., phenylazo, 4-methoxyphenylazo, 4-pivaloylaminophenylazo, 2-hydroxy-4-propanoylphenylazo), an acyloxy group (preferably a formyloxy group, a substituted or unsubstituted alkylcarbonyloxy group having from 2 to 30 (more preferably from 2 to 12) carbon atoms and a substituted or unsubstituted arylcarbonyloxy group having from 7 to 30 (more preferably from 7 to 18) carbon atoms, e.g., acetoxy), a carbamoyloxy group (a substituted or unsubstituted carbamoyloxy group preferably having from 1 to 30 (more preferably from 1 to 12) carbon atoms, e.g., N-methylcarbamoyloxy, N-phenylcarbamoyloxy), a silyloxy group (a silyloxy group preferably having from 3 to 20 (more preferably from 3 to 12) carbon atoms, e.g., trimethylsilyloxy, dibutylmethylsilyloxy), an aryloxycarbonylamino group (a substituted or unsubstituted aryloxycarbonylamino group preferably having from 7 to 30 (more preferably from 7 to 18) carbon atoms, e.g., phenoxycarbonylamino), an imido group (e.g., N-succinimido, N-phthalimido), a heterocyclic thio group (a substituted or unsubstituted heterocyclic thio group preferably having from 2 to 30 (more preferably from 2 to 12) carbon atoms, e.g., 2-benzothiazolylthio, 2,4-diphenoxy-1,3,5-triazole-6-thio, 2-pyridylthio), a sulfinyl group (preferably a substituted or unsubstituted alkylsulfinyl group having from 1 to 30 (more preferably from 1 to 12) carbon atoms and a substituted or unsubstituted arylsulfinyl group having from 6 to 30 (more preferably from 6 to 18) carbon atoms, e.g., 3-phenoxypropylsulfinyl), a phosphonyl group (e.g., phenoxyphosphonyl, octyloxyphosphonyl, phenylphosphonyl), an aryloxycarbonyl group (a substituted or unsubstituted aryloxycarbonyl group preferably having from 7 to 30 (more preferably from 7 to 18) carbon atoms, e.g., phenoxycarbonyl), an acyl group (preferably a formyl group, a substituted or unsubstituted alkylcarbonyl group having from 2 to 30 (more preferably from 2 to 12) carbon atoms, a substituted or unsubstituted arylcarbonyl group having from 7 to 30 (more preferably from 7 to 18) carbon atoms and a substituted or unsubstituted heterocyclic carbonyl group having from 4 to 30 (more preferably from 4 to 12) carbon atoms, which is bonded to the carbonyl group through a carbon atom, e.g., acetyl, 3-phenylpropanoyl, benzoyl), an ionic hydrophilic group (e.g., carboxyl group, phosphono group, sulfo group, quaternary ammonium group), a cyano group, a hydroxyl group, a nitro group and an amino group.

In formula (I), m and n each represents an integer satisfying 1≤m≤4, 0≤n≤3 and 1≤m+n≤4, preferably 1≤m≤2 and 0≤n≤1, and most preferably m=1 or 2 and n=0.

Compounds A to F are preferably Compounds G to L more preferably Compounds G and H, and still more preferably Compound G. Compounds G to L may be used individually or in combination of two or more thereof.

In Compounds G to L, the substituent represented by a₁ is a sulfinyl group, a sulfonyl group, a sulfamoyl group, an acyl group or a carbamoyl group. These groups each may have a substituent such as ionic hydrophilic group, and/or an alkyl or aryl group substituted by an ionic hydrophilic group.

m₁ represents 1 or 2, preferably 1.

Examples of the ionic hydrophilic group as the substituent include a sulfo group, a carboxyl group, a phosphono group and a quaternary ammonium group. Among these ionic hydrophilic groups, a carboxyl group and a sulfo group are preferred, and a sulfo group is more preferred.

The carboxyl group, phosphono group and sulfo group each may be in a salt state and examples of the counter ion for forming the salt include alkali metal ion (e.g., lithium ion, sodium ion, potassium ion) and organic cation (e.g., tetramethylguanidium ion).

The metal compound for use in the reaction of the present invention may be a metal, a metal oxide, a metal hydroxide, a metal chloride, a metal acetate or a metal complex such as aquo complex and ammine complex. Examples of the metal and metal oxide which can be introduced include VO, TiO, Mn, Fe, Co, Ni, Cu, Zn, Pd, Cd and Mg. Among these, Fe, Ni, Cu and Zn are preferred, and Ni Cu and Zn are more preferred. As the salt state, a chloride (e.g., copper chloride), an acetate and an aquo complex are preferred, and a chloride and an acetate are most preferred. The amount of the metal compound used is preferably from 0.01 to 10 times equivalent, more preferably from 0.05 to 5 times equivalent, still more preferably from 0.1 to 3 times equivalent, based on the total amount used of Compounds A to F.

In the present invention, a catalyst may be used at the same time. As the catalyst for use in the present invention, all catalysts commonly used in the synthesis of metal phthalocyanine compounds can be used. Examples thereof include molybdenum compounds such as ammonium molybdate, molybdic acid, ammonium phosphomolybdate and molybdenum oxide, tungsten compounds such as ammonium tungstate and ammonium phosphotungstate, arsenic vanadium compounds, and halides and oxyhalides of boric acid, titanium, tin and antimony. Among these, ammonium molybdate is excellent.

The solvent for use in the process of the present invention may be a general organic solvent. In particular, organic solvents having a hydroxyl group and polar solvents (e.g., acetonitrile, formamide, N,N-dimethylformamide, N,N-dimethylacetamide, dimethylsulfoxide, sulfolane, propylene carbonate, N-methyl-2-pyrrolidone, N-vinyl-2-pyrrolidone, N,N-diethyldodecanamide) are preferred. More preferred examples of the alcohol include methanol, ethanol, pentanol, heptanol, octanol, cyclohexanol, benzyl alcohol, phenethyl alcohol, phenylpropyl alcohol, furfuryl alcohol and anise alcohol. Not only mono- but also oligo- (particularly, di-or tri-) or poly-C₂-C₄-alkylene glycol (simply "glycol") and their mono-C₁-C₈-alkyl- or monoaryl ether (simply "glycol monoether") are preferred. In addition, ethylenebased compounds are also advantageous. Examples thereof include ethylene glycol, 1,2-propylene glycol, 1,3-propylene glycol, diethylene glycol, butylene glycol, diethylene glycol, triethylene glycol, tetraethylene glycol, dipropylene glycol, tripropylene glycol, tetrapropylene glycol, polyethylene glycol, polypropylene glycol, ethylene glycol monomethyl ether, ethylene glycol monoethyl ether, ethylene glycol monopropyl ether, ethylene glycol monobutyl ether, ethylene glycol monohexyl ether, propylene glycol monomethyl ether, propylene glycol monoethyl ether, propylene glycol monopropyl ether, propylene glycol monobutyl ether, propylene glycol monohexyl ether, diethylene glycol monomethyl ether, triethylene glycol monomethyl ether, tetraethylene glycol monomethyl ether, diethylene glycol monoethyl ether, triethylene glycol monoethyl ether, tetraethylene glycol monoethyl ether, diethylene glycol monobutyl ether, triethylene glycol monobutyl ether, tetraethylene glycol monobutyl ether, dipropylene glycol monomethyl ether, tripropylene glycol monomethyl ether, tetrapropylene glycol monomethyl ether, dipropylene glycol monoethyl ether, tripropylene glycol monoethyl ether, tetrapropylene glycol monoethyl ether, dipropylene glycol monobutyl ether, tripropylene glycol monobutyl ether, tetrapropylene glycol monobutyl ether, ethylene glycol monophenyl ether and propylene glycol monophenyl ether. Furthermore, in the present invention, industrially employed inactive solvents can also be used. Examples thereof include nitrobenzene, trichlorobenzene, chloronaphthalene, methylnaphthalene, naphthalene, alkyl benzene, paraffin, naphthene and kerosine.

One of these solvents may be used or an appropriate combination of two or more thereof may be used if they not affect each other. The amount of the solvent used is from 1 to 100 mass times, preferably from 1 to 20 mass times, more preferably from 1 to 5 mass times, the total amount used of Compounds A to F.

The solvent for use in the process of the present invention is more preferably glycerin, at least one compound selected from the compounds represented by formula (III), or, if not affect each other, an appropriately mixed solvent of the above-described organic solvents having a hydroxyl group and polar solvents. In the formula, s and t each independently represents a positive integer, preferably an integer of 1 to 10, more preferably from 1 to 5. X represents a hydrogen atom or a methyl group. Examples of the more preferred solvent include ethylene glycol, diethylene glycol, triethylene glycol, polypropylene glycol, propylene glycol, dipropylene glycol, a 1:2 (v/v) mixed solvent of ethylene glycol and diethylene glycol, a 3:1 (v/v) mixed solvent of propylene glycol and triethylene glycol, and 1:5 (v/v) mixed solvent of methanol and triethylene glycol. The amount of the solvent used is from 1 to 100 mass times, preferably from 1 to 20 mass times, more preferably from 1 to 5 mass times, the total amount used of Compounds A to F.

In the present invention, a prolonged reaction time is not preferred in view of stability of the objective compound or generation of side reaction and this is also unprofitable. The reaction time is preferably less than 10 hours, more preferably less than 5 hours, still more preferably less than 4 hours.

When these are summarized, the production process of a metal phthalocyanine compound of the present invention is preferably a production process having a combination of the following features (i) to (x).
(i) The acid for use in the present invention is not particularly limited and as long as the acid or conjugate acid has a dissociation index pKa of 7.0 or less in an aqueous solution at 25°C, either an organic compound or an inorganic compound can be preferably used. In particular, organic acids having pKa of 0.0 to 7.0 are preferred and organic acids having a carboxyl group are most preferred. Among the organic acids, aliphatic monobasic organic acids are preferred, and formic acid, acetic acid and propionic acid are most preferred.
(ii) As the base, an inorganic or organic base comprising an alkali metal may be used. Preferred examples of the inorganic base include lithium carbonate, sodium carbonate, potassium carbonate, sodium hydrogencarbonate, lithium hydroxide and potassium hydroxide. The organic base is preferably at least one compound selected from the compounds represented by formula (IV). Particularly preferred examples thereof include ethanolamine, diethanolamine and triethanolamine. Other than these, organic acid salts such as lithium acetate, potassium acetate, sodium oxalate and disodium ethylenediaminetetraacetic acid may also be used.
(iii) As for the reaction conditions, the reaction temperature is from 30 to 220°C, preferably from 40 to 200°C, more preferably from 50 to 180°C.
(iv) In Compounds A to F, the substituent a is preferably an aryl group, a heterocyclic group, a ureido group, a sulfonyl group, a sulfinyl group, a sulfonamide group, an acyl group, a carbamoyl group, a sulfamoyl group, an alkoxycarbonyl group or an ionic hydrophilic group, more preferably a heterocyclic group, a sulfinyl group, a sulfonyl group, a sulfamoyl group, an acyl group, a carbamoyl group or an alkoxycarbonyl group, still more preferably a sulfonyl group. These groups each preferably further has a substituent such as ionic hydrophilic group, and/or an alkyl or aryl group substituted by an ionic hydrophilic group, more preferably an alkyl or aryl group substituted by an ionic hydrophilic group, still more preferably an alkyl group substituted by an ionic hydrophilic group.
(v) In Compounds A to F, the substituent b is preferably a halogeno group, a cyano group, a hydroxyl group, a nitro group or an ionic hydrophilic group, more preferably a halogeno group, a cyano group or an ionic hydrophilic group.
(vi) In compounds A to F, m and n each represents an integer satisfying 1≤m≤4, 0≤n≤3 and 1≤m+n<4, preferably 1≤n≤52 and 0≤n≤1, and most preferably m-1 or 2 and n=0.
(vii) Examples of the metal or metal oxide which can be introduced include VO, TiO, Mn, Fe, Co, Ni, Cu, Zn, Pd, Cd and Mg. Among these, Ni, Cu and Zn are preferred. The salt state is preferably a chloride (for example, copper chloride) or an acetate. The amount used is preferably from 0.1 to 3 times equivalent based on the total amount used of Compounds A to F.
(viii) The solvent is most preferably ethylene glycol, diethylene glycol, triethylene glycol, polypropylene glycol, propylene glycol, dipropylene glycol, a 1:2 (v/v) mixed solvent of ethylene glycol and diethylene glycol, or a 4:1 (v/v) mixed solvent of propylene glycol and triethylene glycol. The amount used is particularly preferably from 1 to 5 mass times the total amount used of Compounds A to F.
(ix) The reaction time is particularly preferably less than 4 hours.
(x) Compounds A to F of the present invention are preferably Compounds G to L. In compounds G to L a₁ preferably represents a sulfinyl group, a sulfonyl group, a sulfamoyl group, an acyl group or a carbamoyl group. m₁ represents 1 or 2.

As for the preferred combination thereof, a combination satisfying at least one of the above-described preferred conditions is preferred, a combination satisfying a larger number of preferred conditions is more preferred, and a combination satisfying all of those preferred conditions is most preferred.

### [Examples]

The present invention is described in greater detail below by referring to Examples. The results are shown together in Table 1. The present invention is not limited to these Examples. In Examples, Compounds P, Q and R all belong to Compounds A to F.

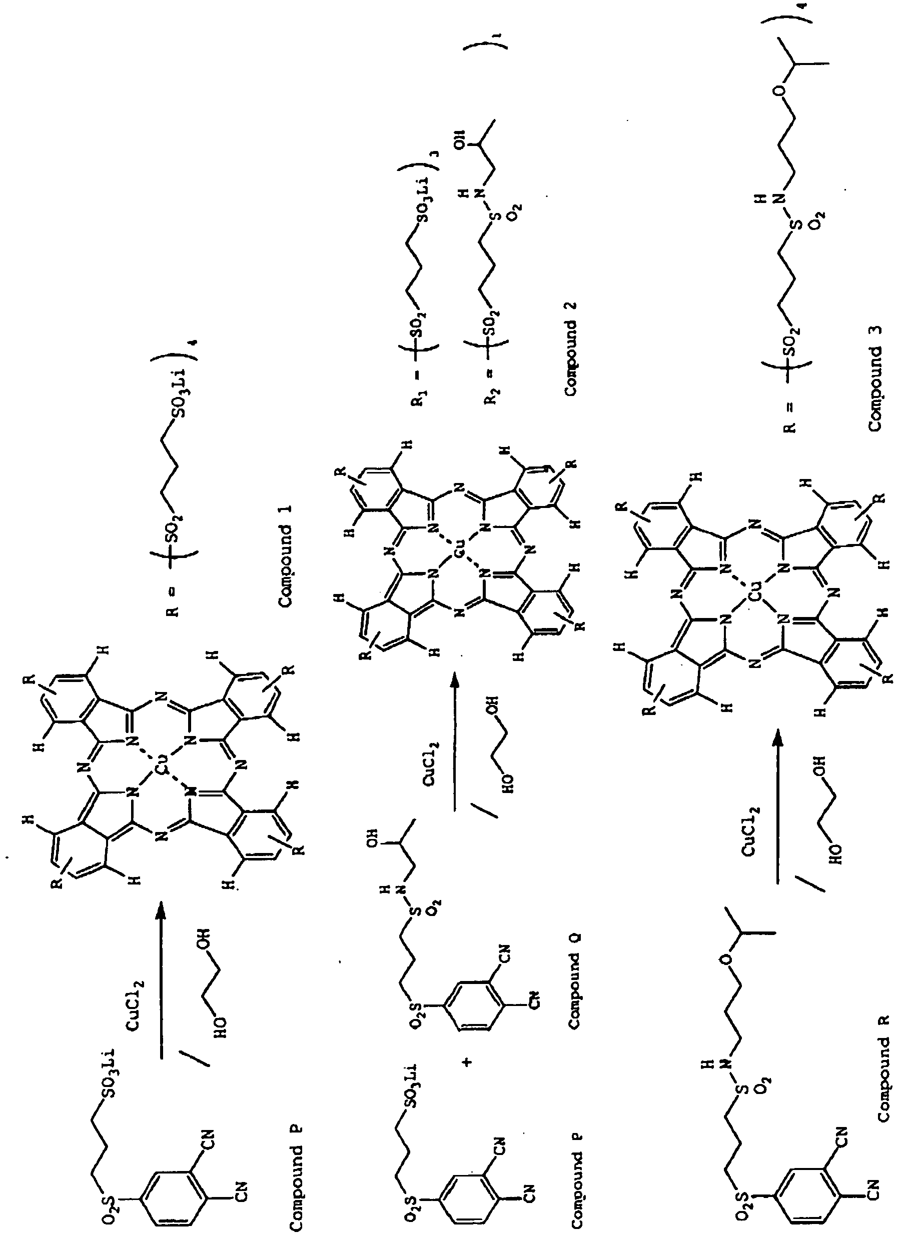

### Synthesis Example 1: Synthesis of Compound 1

Compound P (29.48 g) and 2.6 mL of acetic acid were suspended in 35 mL of ethylene glycol. After elevating the inner temperature to 50°C, 6.04 g of lithium acetate and 3.24 g of copper chloride were added and then the inner temperature was elevated to 70°C. After stirring for 5 hours, the inner temperature was elevated to 90°C and then 19.7 mL of concentrated hydrochloric acid was added dropwise. Subsequently, 4.49 g of lithium chloride was added and 210 mL of isopropanol was added dropwise to cause crystallization. The resulting mixture was cooled to 30°C and filtered by suction and the solid was washed by splashing thereon isopropanol and then dried. Thereafter, 28.77 g of the obtained crude crystal was dissolved in 115 mL of ion exchanged water and then 2.5N-LiOH aq. was added at 50°C until the pH reached 10.5. After stirring at 90°C for 30 minutes, 330 mL of isopropanol was added dropwise to cause crystallization. The resulting mixture was filtered by suction and the solid was washed by splashing thereon isopropanol. Yield: 27.33 g, percentage yield: 85.5%. The identification was performed by the following methods. Mass spectrometry: FAB-MS (NEGA 1343), elemental analysis (found: C, 36.69; H, 3.27; N, 7.79; calculated as C₄₄H₃₆CuLi₄N₈O₂₀S₄•5H₂O: C, 36.83; H, 3.23; N, 7.81), absorption of solution: λmax=628.9 nm, ε67500 (H₂O).

### Synthesis Example 2: Synthesis of Compound 2

Compound P (30.52 g), 11.83 g of Compound Q and 3.6 mL of acetic acid were dissolved in 100 mL of ethylene glycol at 110°C. After cooling to 50°C, 8.34 g of lithium acetate and 4.47 g of copper chloride were added and then the inner temperature was elevated to 70°C. After stirring for 3 hours, the inner temperature was elevated to 90°C and then 27.8 mL of concentrated hydrochloric acid was added dropwise. Subsequently, 6.20 g of lithium chloride was added and 300 mL of isopropanol was added dropwise to cause crystallization. The resulting mixture was cooled to 30°C and filtered by suction and the solid was washed by splashing thereon isopropanol and then dried. Thereafter, 35.29 g of the obtained crude crystal was dissolved in 140 mL of ion exchanged water and then 2.5N-LiOH aq. was added at 50°C until the pH reached 10.5. After stirring at 90°C for 30 minutes, 400 mL of isopropanol was added dropwise to cause crystallization. The resulting mixture was filtered by suction and the solid was washed by splashing thereon isopropanol. Yield: 33.75 g, percentage yield: 76.5%. The identification was performed by the following methods. Mass spectrometry: FAB-MS (NEGA 1395), elemental analysis (found: C, 39.02; H, 3.40; N, 8.72; calculated as C₄₇H₄₄CuLi₃N₉O₂₀S₈•3H₂O: C, 38.94; H, 3.48; N, 8.69), absorption of solution: λmax=624.7 nm, ε56900 (H₂O).

### Synthesis Example 3: Synthesis of Compound 3

Compound R (13.93 g) and 1.0 mL of acetic acid were suspended in 28 mL of ethylene glycol. After the temperature was elevated to 50°C, 2.21 g of lithium acetate and 1.19 g of copper chloride were added and then the inner temperature was elevated to 70°C. After stirring for 3 hours, the inner temperature was elevated to 90°C and then 100 mL of isopropanol was added dropwise to cause crystallization. The resulting mixture was cooled to 30°C and filtered by suction and the solid was washed by splashing thereon isopropanol and then dried. Thereafter, 10.53 g of the obtained crude crystal was dissolved in 140 mL of methanol and then 400 mL of isopropanol was added dropwise to cause crystallization. The resulting mixture was filtered by suction and the solid was washed by splashing thereon isopropanol. Yield: 10.02 g, percentage yield: 88.2%. The identification was performed by the following methods. Mass spectrometry: FAB-MS (NEGA 1715), elemental analysis (found: C, 47.28; H, 5.48; N, 9.70; calculated as C₆₈H₉₂CuN₁₂O₂₀S₈•1H₂O: C, 47.06; H, 5.46; N, 9.68), absorption of solution: λmax=598.3 nm, ε36800 (ethyl acetate).

### Synthesis Examples 4 to 12: Synthesis of Compound 2

The operation was performed in the same manner as in Synthesis Example 2 except for changing the ethylene glycol, the amount used and the reaction temperature of Synthesis Example 2 as shown in Table 1.

### [Comparative Examples]

### Comparative Example 1: Synthesis of Compound 1

Compound P (29.48 g) was suspended in 35 mL of ethylene glycol and the resulting suspension was heated to an inner temperature of 120°C. Thereto, 3.24 g of copper chloride was added and after stirring for 2 hours, the mixture was cooled to an inner temperature of 80°C and then 19.7 mL of concentrated hydrochloric acid was added dropwise. Subsequently, 4.49 g of lithium chloride was added and 210 mL of isopropanol was added dropwise to cause crystallization. The resulting mixture was cooled to 30°C and filtered by suction and the solid was washed by splashing thereon isopropanol and then dried. Thereafter, 17.58 g of the obtained crude crystal was dissolved in 115 mL of ion exchanged water and then 2.5N-LiOH aq. was added at 50°C until the pH reached 10.5. After stirring at 90°C for 30 minutes, 330 mL of isopropanol was added dropwise to cause crystallization. The resulting mixture was filtered by suction and the solid was washed by splashing thereon isopropanol. Yield: 14.95 g, percentage yield: 46.8%. The identification was performed by the following methods. Mass spectrometry: FAB-MS (NEGA 1344), elemental analysis (found: C, 37.11; H, 3.14; N, 7.87; calculated as C₄₄H₃₆CuLi₄N₈O₂₀S₈•4H₂O: C, 37.30; H, 3.13; N, 7.91).

### Comparative Example 2: Synthesis of Compound 2

Compound P (30.52 g) and 11.83 g of Compound Q were dissolved in 100 mL of ethylene glycol at 110°C. After cooling to 50°C, 4.47 g of copper chloride was added and then the inner temperature was elevated to 70°C. After stirring for 3 hours, the inner temperature was elevated to 120°C and the mixture was further stirred for 2 hours. Thereto, 27.8 mL of concentrated hydrochloric acid was added dropwise. Subsequently, 6.20 g of lithium chloride was added and 300 mL of isopropanol was added dropwise to cause crystallization. The resulting mixture was cooled to 30°C and filtered by suction and the solid was washed by splashing thereon isopropanol and then dried. Thereafter, 24.17 g of the obtained crude crystal was dissolved in 140 mL of ion exchanged water and then 2.5N-LiOH aq. was added at 50°C until the pH reached 10.5. After stirring at 90°C for 30 minutes, 400 mL of isopropanol was added dropwise to cause crystallization. The resulting mixture was filtered by suction and the solid was washed by splashing thereon isopropanol. Yield: 21.84 g, percentage yield: 49.5%. The identification was performed by the following methods. Mass spectrometry: FAB-MS (NEGA 1395), elemental analysis (found: C, 37.80; H, 3.62; N, 8.53; calculated as C₄₇H₄₄CuLi₃N₉O₂₀S₈•5H₂O: C, 37.99; H, 3.66; N, 8.48).

### Comparative Example 3: Synthesis of Compound 1

Compound P (29.48 g) and 2.6 mL of acetic acid were suspended in 35 mL of ethylene glycol. After elevating the inner temperature to 50°C, 17.48 g of calcium acetate and 3.24 g of copper chloride were added and then the inner temperature was elevated to 70°C. After stirring for 5 hours, the inner temperature was elevated to 90°C and then 19.7 mL of concentrated hydrochloric acid was added dropwise. Subsequently, 4.49 g of lithium chloride was added and 210 mL of isopropanol was added dropwise to cause crystallization. The resulting mixture was cooled to 30°C and filtered by suction and the solid was washed by splashing thereon isopropanol and then dried. Thereafter, 10.96 g of the obtained crude crystal was dissolved in 115 mL of ion exchanged water and then 2.5N-LiOH aq. was added at 50°C until the pH reached 10.5. After stirring at 90°C for 30 minutes, 330 mL of isopropanol was added dropwise to cause crystallization. The resulting mixture was filtered by suction and the solid was washed by splashing thereon isopropanol. Yield: 9.08 g, percentage yield: 28.4%. The identification was performed by the following methods. Mass spectrometry: FAB-MS (NEGA 1343), elemental analysis (found: C, 35.84; H, 2.99; N, 7.55; calculated as C₄₄H₃₆CuLi₄N₈O₂₀S₄•8H₂O: C, 35.93; H, 3.43; N, 7.62).

### Comparative Example 4: Synthesis of Compound 3

Compound R (13.93 g) was suspended in 28 mL of ethylene glycol. After the temperature was elevated to 50°C, 1.19 g of copper chloride was added and then the inner temperature was elevated to 70°C. Thereto, 1 mL of DBU (diazabicycloundecene) was added and after stirring for 3 hours, the inner temperature was elevated to 120°C and the mixture was further stirred for 2 hours. Subsequently, 100 mL of isopropanol was added dropwise to cause crystallization. The resulting mixture was cooled to 30°C and filtered by suction and the solid was washed by splashing thereon isopropanol and then dried. Thereafter, 8.20 g of the obtained crude crystal was dissolved in 70 mL of methanol and then 200 mL of isopropanol was added dropwise to cause crystallization. The resulting mixture was filtered by suction and the solid was washed by splashing thereon isopropanol. Yield: 7.38 g, percentage yield: 63.0%. The identification was performed by the following methods. Mass spectrometry: FAB-MS (NEGA 1715), elemental analysis (found: C, 46.88; H, 5.49; N, 9.62; calculated as C₆₈H₉₂CuN₁₂O₂₀S₈•1H₂O: C, 47.06; H, 5.46; N, 9.68).

### Comparative Example 5: Synthesis of Compound 2

The operation was performed in the same manner as in Synthesis Example 2 except for not using the acid and base of Synthesis Example 2 and changing the ethylene glycol, the amount used and the reaction temperature as shown in Table 1.

**TABLE 1**

| | Reaction Solvent/ Amount Used | Reaction Temperature | Acid | Base | Crude Yield, % | Yield after Purification, % |
|---|---|---|---|---|---|---|
| Synthesis Example 1 | ethylene glycol 35 ml | 70°C | acetic acid | lithium acetate | 90.0 | 85.5 |
| Synthesis Example 2 | ethylene glycol 100 ml | 70°C | acetic acid | lithium acetate | 80.1 | 76.5 |
| Synthesis Example 3 | ethylene glycol 28 ml | 70°C | acetic acid | lithium acetate | 92.7 | 88.2 |
| Synthesis Example 4 | 1,2-propanediol 188 ml | 95°C | acetic acid | lithium acetate | 84.4 | 71.1 |
| Synthesis Example 5 | 1,2-propanediol 188 ml | 95°C | acetic acid | lithium acetate 8.34 g diethanolamine 2.59 g | 90.2 | 87.9 |
| Synthesis Example 6 | 1,2-propanediol 188 ml | 95°C | acetic acid | lithium acetate 8.34 g diethanolamine 4.45 g | 93.2 | 90.7 |
| Synthesis Example 7 | 1,3-propanediol 188 ml | 95°C | acetic acid | lithium acetate | 81.0 | 77.5 |
| Synthesis Example 8 | glycerin 155 ml | 95°C | acetic acid | lithium acetate | 77.0 | 71.4 |
| Synthesis Example 9 | diethylene glycol 188 ml | 95°C | acetic acid | lithium acetate | 98.2 | 94.3 |
| Synthesis Example 10 | Triethylene glycol 315 ml | 95°C | acetic acid | lithium acetate | 95.7 | 93.0 |
| Synthesis Example 11 | pentanediol/diethylene glycol=1/3 230 ml | 95°C | acetic acid | lithium acetate | 88.7 | 82.6 |
| Synthesis Example 12 | 1,2-propanediol/triethylene qlycol=4/1 200 ml | 95°C | acetic acid | lithium acetate | 93.6 | 91.0 |
| Comparative Example 1 | ethylene glycol 35 ml | 70°C | none | none | 55.0 | 46.8 |
| Comparative Example 2 | ethylene glycol 100 ml | 70°C | none | none | 54.8 | 49.5 |
| Comparative Example 3 | ethylene glycol 35 ml | 70°C | acetic acid | Calcium acetate | 34.3 | 28.4 |
| Comparative Example 4 | ethylene glycol 28 ml | 70°C | none | DBU | 70.0 | 63.0 |
| Comparative Example 5 | diethylene glycol 188 ml | 95°C | none | none | 63.9 | 58.9 |

As apparently seen from the results above, according to the constitution of the present invention, a metal phthalocyanine compound can be obtained in a high yield. It is revealed that when an alkaline earth metal base is used, the yield becomes extremely low.

## Claims

1. A process for producing a metal phthalocyanine compound, which comprises reacting at least one of the Compounds A to F represented below and a metal compound, wherein said reaction is performed in a buffer solution comprising an acid and at least one of an organic base and an alkali metal-containing inorganic base: 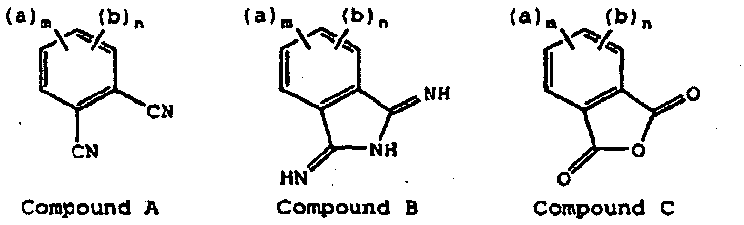 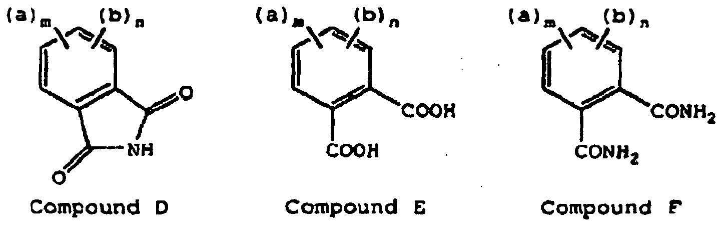 wherein a and b each independently represents a substituent, and the sum total of Hammett's substituent constant σp values thereof is 0.20 or more; m and n each represents an integer satisfying 1≤m≤4, 0≤n≤3 and 1≤m+n≤4.

2. The process of claim 1, wherein the Compounds A to F are Compounds G to L represented below 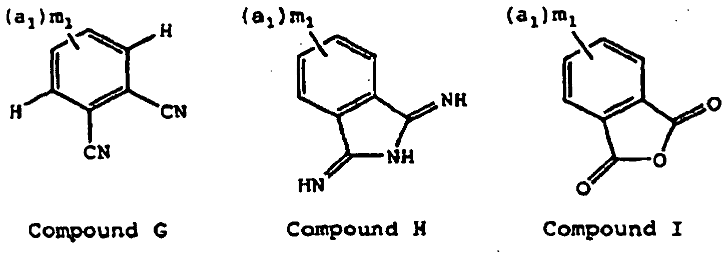 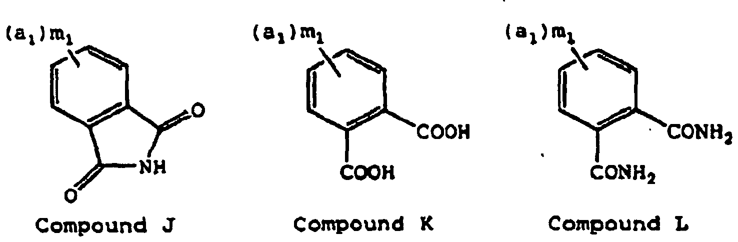 wherein a₁ represents a sulfinyl group, a sulfonyl group, a sulfamoyl group, an acyl group or a carbamoyl group; m₁ represents 1 or 2.

3. The process of claim 1 or 2, wherein at least one of compounds selected from glycerin and the compounds represented by the following formula (III) is used as the reaction solvent: 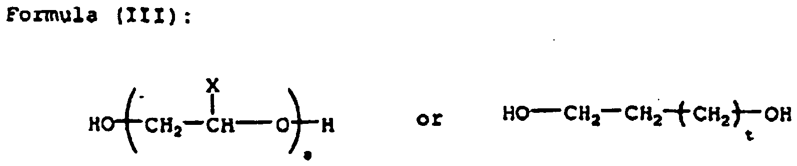 wherein s and t each independently represents a positive integer and X represents a hydrogen atom or a methyl group.

4. The process of any one of claims 1 to 3,wherein the organic base includes at least one selected from the compounds represented by the following formula (IV): 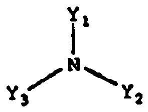 wherein Y₁, Y₂ and Y₃ each independently represents a hydrogen atom, an alkyl group, an alkenyl group, an alkynyl group, a cycloalkyl group, a cycloalkenyl group, an aryl group or a heterocyclic group, Y₁, Y₂ and Y₃ may combine to form a condensed organic base, and each group may further have a substituent.

5. The process of any one of claims 1 to 4, wherein the acid has pKa of 0.0 to 7.0 at 25°C and ionic strength of 0.1.

6. The process of any one of claims 1 to 5, wherein the acid is an organic acid.

7. The process of any one of claims 1 to 6, wherein the reaction temperature is from 30 to 220 °C.

8. The process of any one of claims 1 to 7, wherein the metal compound includes at least one of VO, TiO, Mn, Fe, Co, Ni, Cu, Zn, Pd, Cd and Mg.

9. The process of any one of claims 1 to 8, wherein the amount of the acid is from 0.05 to 20 equivalent based on the total amount of Compound A to F.

10. The process of any one of claims 1 to 9, wherein the amount of the base is from 0.05 to 30 equivalent based on the total amount of Compound A to F.

## Patentansprüche

1. Verfahren zum Herstellen einer Metallphthalocyaninverbindung, welches das Umsetzen von wenigstens einer der nachstehend wiedergegebenen Verbindungen A bis F und einer Metallverbindung umfasst, wobei die Reaktion in einer Pufferlösung durchgeführt wird, die eine Säure und wenigstens eine von einer organischen Base und einer Alkalimetall enthaltenden anorganischen Base umfasst: 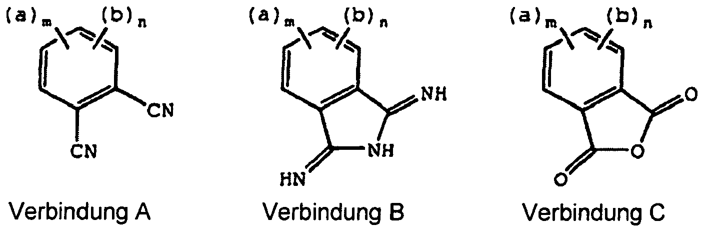 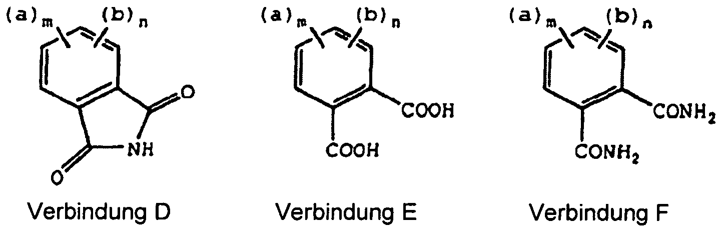 wobei a und b jeweils unabhängig einen Substituenten bedeutet und die Gesamtsumme ihrer σp-Werte der Hammett-Substituentenkonstante 0,20 oder mehr beträgt; m und n jeweils eine ganze Zahl bedeutet, für die gilt 1≤m≤4, 0≤n≤3 und 1≤m+n≤4.

2. Verfahren nach Anspruch 1, wobei die Verbindungen A bis F die nachstehend wiedergegebenen Verbindungen G bis L sind 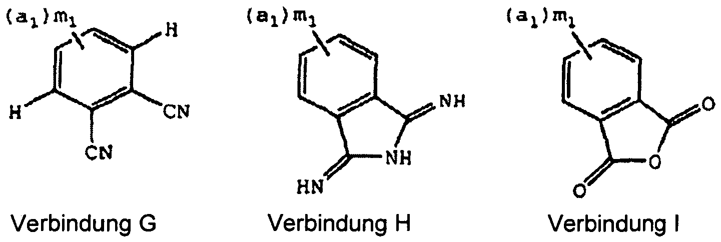 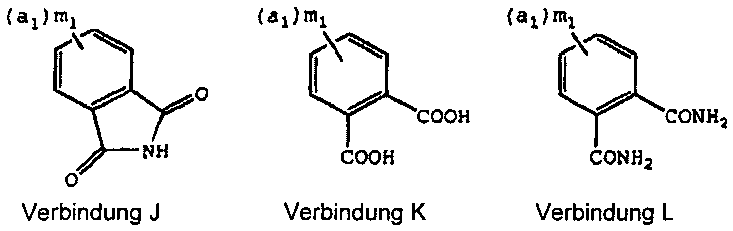 wobei a₁ eine Sulfinylgruppe, eine Sulfonylgruppe, eine Sulfamoylgruppe, eine Acylgruppe oder eine Carbamoylgruppe bedeutet; m₁ 1 oder 2 bedeutet.

3. Verfahren nach Anspruch 1 oder 2, wobei wenigstens eine der Verbindungen ausgewählt aus Glycerin und den Verbindungen, die durch die folgende Formel (III) wiedergegeben sind, als das Reaktionslösungsmittel verwendet wird: 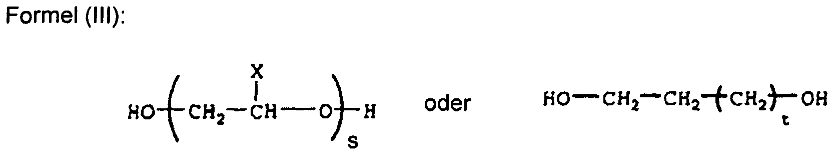 wobei s und t jeweils unabhängig eine positive ganze Zahl bedeutet und X ein Wasserstoffatom oder eine Methylgruppe bedeutet.

4. Verfahren nach einem der Ansprüche 1 bis 3, wobei die organische Base wenigstens eine Verbindung einschließt, die ausgewählt ist aus den Verbindungen, die durch die folgende Formel (IV) wiedergegeben sind: 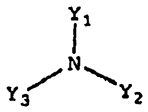 wobei Y₁, Y₂ und Y₃ jeweils unabhängig ein Wasserstoffatom, eine Alkylgruppe, eine Alkenylgruppe, eine Alkinylgruppe, eine Cycloalkylgruppe, eine Cycloalkenylgruppe, eine Arylgruppe oder eine heterocyclische Gruppe bedeutet, Y₁, Y₂ und Y₃ sich vereinigen können unter Bildung einer kondensierten organischen Base, und jede Gruppe weiterhin einen Substituenten aufweisen kann.

5. Verfahren nach einem der Ansprüche 1 bis 4, wobei die Säure einen pKa von 0,0 bis 7,0 bei 25 °C und eine lonenstärke von 0,1 aufweist.

6. Verfahren nach einem der Ansprüche 1 bis 5, wobei die Säure eine organische Säure ist.

7. Verfahren nach einem der Ansprüche 1 bis 6, wobei die Reaktionstemperatur 30 bis 220 °C beträgt.

8. Verfahren nach einem der Ansprüche 1 bis 7, wobei die Metallverbindung wenigstens eines von VO, TiO, Mn, Fe, Co, Ni, Cu, Zn, Pd, Cd und Mg einschließt.

9. Verfahren nach einem der Ansprüche 1 bis 8, wobei die Menge der Säure 0,05 bis 20 Äquivalente, bezogen auf die Gesamtmenge von Verbindung A bis F, beträgt.

10. Verfahren nach einem der Ansprüche 1 bis 9, wobei die Menge der Base 0,05 bis 30 Äquivalente, bezogen auf die Gesamtmenge von Verbindung A bis F, beträgt.

## Revendications

1. Procédé de production d'un composé de phthalocyanine de métal, lequel comprend la réaction d'au moins un des composés A à F représentés ci-dessous et d'un composé de métal, dans lequel ladite réaction est réalisée dans une solution tampon comprenant un acide et au moins une parmi une base organique et une base inorganique contenant un métal alcalin : 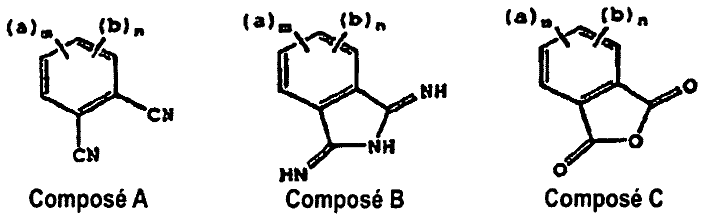 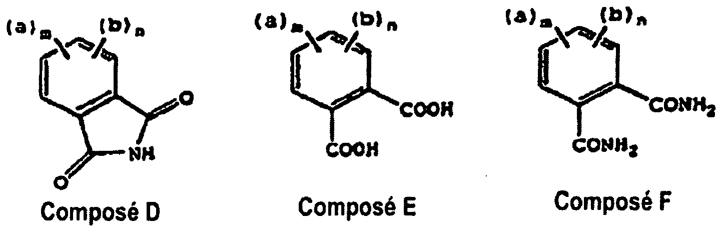 où a et b représentent chacun indépendamment un substituant, et la somme totale des valeurs σp de la constante de substituant de Hammett de ceux-ci est de 0,20 ou supérieure ; m et n représentent chacun un nombre entier satisfaisant 1≤m≤4, 0≤n≤3 et 1≤m+n≤4.

2. Procédé selon la revendication 1, dans lequel les composés A à F sont les composés G à L représentés ci-dessous. 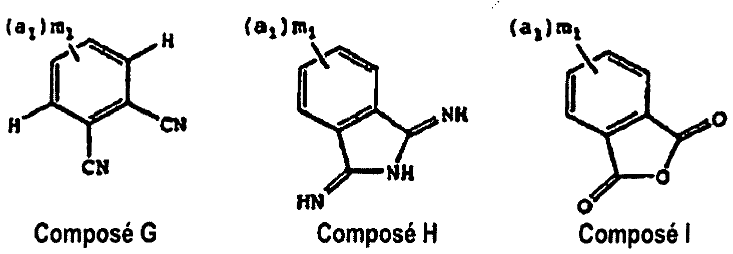 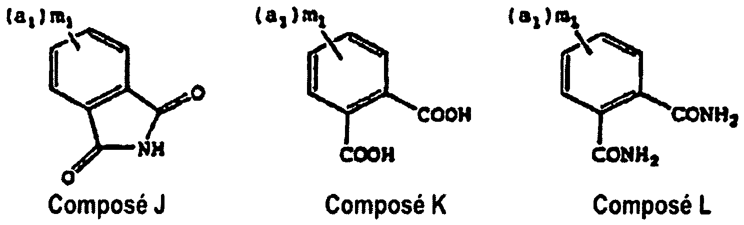 où a₁ représente un groupe sulfinyle, un groupe sulfonyle, un groupe sulfamoyle, un groupe acyle ou un groupe carbamoyle; m₁ représente 1 ou 2.

3. Procédé selon la revendication 1 ou 2, dans lequel au moins un des composés choisis parmi la glycérine et les composés représentés par la formule (III) suivante est utilisé comme solvant de réaction : 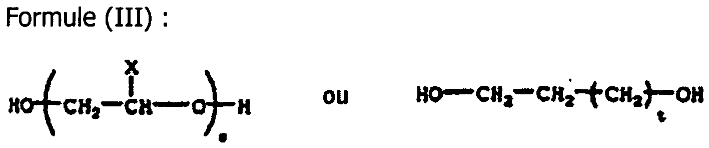 où s et t représentent chacun indépendamment un nombre entier positif et X représente un atome d'hydrogène ou un groupe méthyle.

4. Procédé selon l'une quelconque des revendications 1 à 3, dans lequel la base organique comprend au moins une choisie parmi les composés représentés par la formule (IV) suivante : 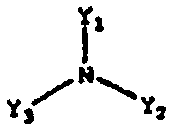 où Y₁, Y₂ et Y₃ représentent chacun indépendamment un atome d'hydrogène, un groupe alkyle, un groupe alcényle, un groupe alcynyle, un groupe cycloalkyle, un groupe cycloalcényle, un groupe aryle ou un groupe hétérocyclique, Y₁, Y₂ et Y₃ peuvent se combiner pour former une base organique condensée, et chaque groupe peut de plus présenter un substituant.

5. Procédé selon l'une quelconque des revendications 1 à 4, dans lequel l'acide présente un pKa de 0,0 à 7,0 à 25°C et une force ionique de 0,1.

6. Procédé selon l'une quelconque des revendications 1 à 5, dans lequel l'acide est un acide organique.

7. Procédé selon l'une quelconque des revendications 1 à 6, dans lequel la température de réaction est de 30 à 220°C.

8. Procédé selon l'une quelconque des revendications 1 à 7, dans lequel le composé de métal comprend au moins un parmi VO, TiO, Mn, Fe, Co, Ni, Cu, Zn, Pd, Cd et Mg.

9. Procédé selon l'une quelconque des revendications 1 à 8, dans lequel la quantité de l'acide est de 0,05 à 20 équivalents sur la base de la quantité totale des composés A à F.

10. Procédé selon l'une quelconque des revendications 1 à 9, dans lequel la quantité de la base est de 0,05 à 30 équivalents sur la base de la quantité totale des composés A à F.
